# EUROPEAN PATENT APPLICATION

(11) **EP 2 228 244 A1**
(43) Date of publication of application: **15.09.2010**
(21) Application number: 09425104.8
(22) Date of filing: 13.03.2009
(51) Int. Cl.: B60J 1/16

(54) **Slideable window**

(71) Applicant: Pilkington Italia S.p.A., 66050 San Salvo (CH) (IT)
(72) Inventor: Modolo, Giuseppe, 10152 Torino (IT)
(74) Representative: Pettet, Nicholas Edward

(57) **Abstract**

A vehicle sliding window assembly (1) is disclosed. The assembly (1) comprises a sliding glazed panel (3) mounted flush with respect to a fixed glazed panel (2a) by means of at least one mounting rail (5,6). The sliding glazed panel (3) is free to articulate out of the plane of the fixed glazed panel (2) and to slide along at least part of the length of the mounting rail (5,6). A slideable cover (9) is provided in co-operation with the mounting rail (5,6), the slideable cover (9) having at least one "L"-shaped cut-out portion (10,11) for receiving a locking pin, with the sliding glazed panel (3) being provided with at least one locking pin (12,13) for engaging with the "L"-shaped cut-out portion (10,11) to form a locking mechanism. The slideable cover (9) is moveable between a first position, where the articulation of the sliding glazed panel out of the plane of the fixed glazed panel is prevented, and a second position, where the articulation of the sliding glazed panel out of the plane of the fixed glazed panel is enabled.

## Description

The present invention relates to a slideable window for a vehicle, in particular, a horizontally slideable window, having a moveable portion lying flush with a fixed glazed panel.

Openable side windows are often provided in large vehicles, such as buses, trams and trains, to enable both passengers and the driver of the vehicle access to ventilation. Such windows typically comprise a fixed glazed panel and an opening glazed panel that is able to move relative to the fixed glazed panel, for example, by rotating or by sliding. The side windows adjacent the driver of a vehicle tend to be horizontally sliding windows, having a rectangular sliding glazed panel that moves relative to a fixed glazed panel held within a window frame on the vehicle body. The sliding glazed panel is mounted by means of two internally mounted rails, one upper rail and one lower rail, along which the window slides in a horizontal fashion courtesy of a sliding mechanism. These rails are fixed to the fixed glazed panel of the glazing, the vehicle bodywork or both. Stops are provided to limit the horizontal movement of the opening panel, and a locking mechanism is provided to lock the sliding glazed panel in position to keep the window closed. This locking mechanism is usually incorporated in a handle, which is used to open and close the window by releasing and locking the sliding glazed panel.

To prevent the exposure of the rails, the sliding mechanism and/or the sliding surfaces, in particular the lower rail, such that soiling is avoided, the window is typically mounted flush with the vehicle body, and the sliding glazed panel of the window to be flush with the surrounding fixed glazed panel when in its closed position. In order to open such windows, when the locking mechanism is released, the sliding glazed panel first articulates inwards, out of the plane of the fixed glazed panel of the window, and then slides along the internally mounted rails until it reaches a stop. Various methods of carrying out this articulation and sliding motion are known in the art, for example: use of a horizontal ramp, as described in EP 0 778 168; use of articulating mounts rotatable about a vertical axis, as described in EP 0 683 064; or the use of articulating mounts rotatable about a horizontal axis, as described in DE 103 01 584 and EP 0 857 844.
However, although each of these window designs has a locking or other opening mechanism for use by a person inside the vehicle, as the opening portion opens by first articulating inwards, there is an underlying security risk that the opening portion of the window can be opened from outside of the vehicle. This may be solved partly by using a locking mechanism that requires a key or similar to lock and unlock the mechanism. Whilst this solves the security problem, a secondary issue arises of safety. In an emergency, it may be necessary to open the opening portion of the window quickly to allow occupants to escape the vehicle. This is not possible where a key is required, which must be found before the mechanism is unlocked and the opening portion of the window opened.

Consequently, there is a need for a simple yet effective locking mechanism that prevents opening of the window from outside of the vehicle, yet can be quickly and easily removed in an emergency.

The present invention aims to address these problems by providing a vehicle sliding window assembly comprising a sliding glazed panel mounted flush with respect to a fixed glazed panel by means of at least one mounting rail, the sliding glazed panel being free to articulate out of the plane of the fixed glazed panel and to slide along at least part of the length of the mounting rail, wherein a slideable cover is provided in co-operation with the mounting rail, the slideable cover having at least one "L"-shaped cut-out portion for receiving a locking pin, and the sliding glazed panel is provided with at least one locking pin for engaging with the "L"-shaped cut-out portion to form a locking mechanism, such that the slideable cover is moveable between a first position, where the articulation of the sliding glazed panel out of the plane of the fixed glazed panel is prevented, and a second position, where the articulation of the sliding glazed panel out of the plane of the fixed glazed panel is enabled.

Preferably, the locking mechanism comprises two "L"-shaped cut-outs, each receiving a single locking pin. More preferably, the sliding glazed panel is provided with a frame and the locking pins are mounted on the frame.

The slideable cover may be formed from a lightweight material. Preferably, the slideable cover is formed from a thin, shaped metal sheet or a moulded plastics material.

The slideable cover may be provided with grip enhancing means. Preferably, the grip enhancing means comprise ridges or contours.

At least one of the sliding glazed panel and the fixed glazed panel may comprise one of: a single ply of toughened glass; a laminated glazing comprising two plies of glass having an interlayer laminated therebetween; or a double-glazed unit, comprising two plies of glass spaced apart to form a cavity filled by a gas.

The present invention will be described by way of example only, and with reference to the accompanying drawings, in which:
Figure 1 is a schematic elevation view of a slideable vehicle window in a closed position, viewed from outside a vehicle;
Figure 2 is a schematic plan view of part of a slideable window having a locking mechanism in accordance with the present invention;
Figure 3a is a schematic plan view of the lower part of the locking mechanism in accordance with the present invention;
Figure 3b is a schematic plan view of the upper part of the locking mechanism in accordance with the present invention; and
Figure 4a is a schematic plan view of the locking mechanism in accordance with the present invention in an unlocked position;
Figure 4b is a schematic plan view of the locking mechanism in accordance with the present invention in partway through the opening of the window; and
Figure 4c is a schematic plan view of the locking mechanism in accordance with the present invention, in a locked position.

Rather than using a lock and key mechanism, the present invention provides a simple locking mechanism that effectively prevents the opening of the opening portion of a slideable window in a vehicle from outside of the vehicle, whilst being easily opened from inside the vehicle in the event of an emergency.

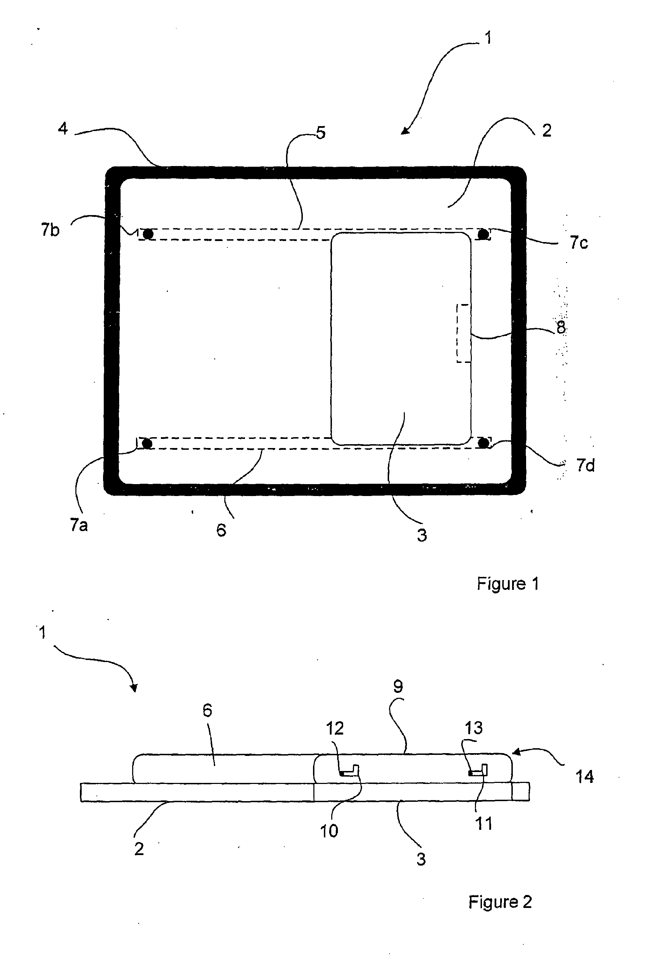

Figure 1 is a schematic elevation view of a slideable vehicle window in a closed position, viewed from outside a vehicle. Such a window is typically used as the driver's window in a bus, coach, tram or train. The vehicle sliding window assembly 1 comprises a fixed glazed panel 2, which is mounted within a frame provided in the bodywork of a vehicle (not shown), and a sliding glazed panel 3, which fits within an aperture provided within the fixed glazed panel 1, and is and is mounted flush respect to the fixed glazed panel 2, such that when in a closed position, the sliding glazed panel 3 is completely flush with the fixed glazed panel 2. The fixed glazed panel 2 is itself flush with the vehicle body work (not shown) and sealed in place by a gasket 4.

The sliding glazed panel 3 is mounted with respect to the fixed glazed panel 2 on upper 5 and lower 6 horizontal mounting rails (shown in dashed lines to indicate being viewed through the window). The sliding glazed panel 3 is free to articulate out of the plane of the fixed glazed panel 2, and to slide along at least part of the length of the horizontal mounting rails 5, 6. This sliding motion is achieved by two sliding mechanisms (not shown) one housed in the upper horizontal mounting rail 5 and one in lower horizontal mounting rail 6. The horizontal mounting rails 5, 6, may be formed of a thin sheet metal, such as aluminium, or from a plastic material, or a metallic alloy, such as stainless steel, and are fixed to the fixed glazed panel by bolts 7a, 7b, 7c, 7d passing through the fixed glazed panel. Alternatively, the upper 5 and lower 6 mounting rails may be mounted on the fixed panel by other means, such as adhesive, or on the vehicle body. A handle 8 is provided on the inside of the sliding glazed panel 3, enabling the opening portion to be articulated inwards and slid along the upper 5 and lower 6 horizontal mounting rails, by means of the sliding mechanism.

Figure 2 is a schematic plan view of a slideable window having a locking mechanism in accordance with the present invention. In this figure, only the lower horizontal mounting rail 6 is shown for clarity. As in Figure 1, the sliding glazed panel 3 is mounted with respect to the fixed glazed panel 2 by means of the lower horizontal mounting rail 6. The lower horizontal mounting rail 6 is provided with a slideable cover 9, which covers a portion of the lower horizontal mounting rail 6 corresponding to the width of the sliding glazed panel 3 when the sliding glazed panel 3 is closed. The slideable cover 9 is provided with two "L"-shaped cut-out portions 10, 11, each with the foot of the "L" lying perpendicular to the plane of the vehicle sliding window assembly 1. The "L" shaped cut outs are each adapted to receive a locking pin 12, 13 mounted on the sliding glazed panel 3, which engage with the "L"-shaped cut-out portions in the slideable cover 3 to form a locking mechanism 14 in accordance with the present invention. This is discussed in more detail below.

The slideable cover 9 may be mounted on the lower horizontal mounting rail 6 by any suitable means, for example, a protrusion provided on the slideable cover 9 may engage with a groove provided on the lower horizontal mounting rail 6 or vice versa, or a ball bearing arrangement may be provided on the slideable cover 9 to run freely within a groove provided on the lower horizontal mounting rail 6. A stop may be provided at each end of the lower horizontal mounting rail 6 to limit the movement of the slideable cover 9. Preferably, the slideable cover 9 is formed of a lightweight material, such as a plastic, or a shaped thin metal sheet. Ridges, contours or other grip enhancing means may be provided to make moving the slideable cover 9 by hand easier.

As the construction of the lower horizontal mounting rail and the actual sliding mechanism used in conjunction with the present invention are not relevant to the operation of the locking mechanism, they will not be discussed in detail here. However, a suitable sliding mechanism and horizontal mounting rail arrangement for use in conjunction with the present invention are described in W02007/141314. The slideable cover 9 also acts to cover the sliding mechanism used to move the sliding glazing panel 3.

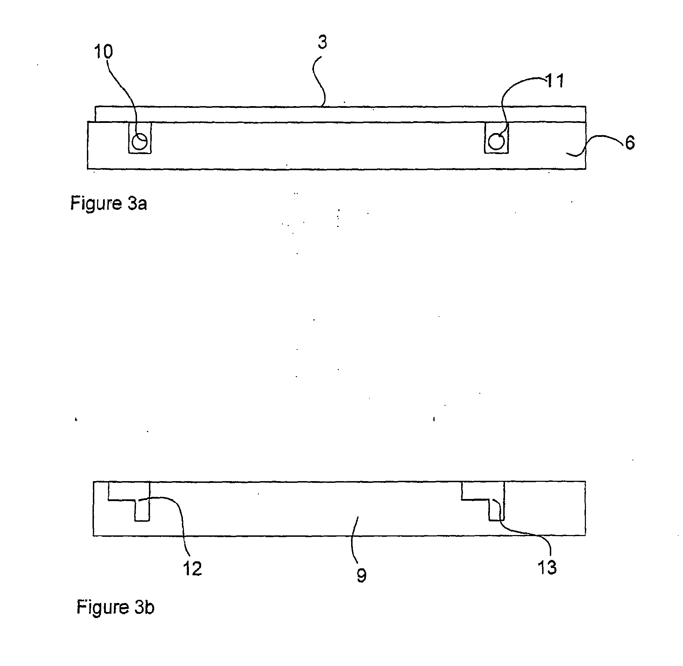

The locking mechanism in accordance with the present invention is shown in more detail in Figures 3a and 3b. Figure 3a is a schematic plan view of the lower part of the locking mechanism in accordance with the present invention. The locking pins 12, 13 are mounted on the sliding glazed panel 3 of the window, above the plane of the lower horizontal mounting rail 6. Figure 3b is a schematic plan view of the upper part of the locking mechanism in accordance with the present invention. This shows the "L"-shaped cut-out portions 10, 11 in more detail. The "L"-shaped cut-out portions are positioned on the slideable cover 9 to allow the inward articulation of the sliding glazed panel 3 when the sliding mechanism is activated, and such that the slideable cover 9 covers the lower horizontal mounting rail 6 along the width of the sliding glazed panel 3 when in the closed and locked position.

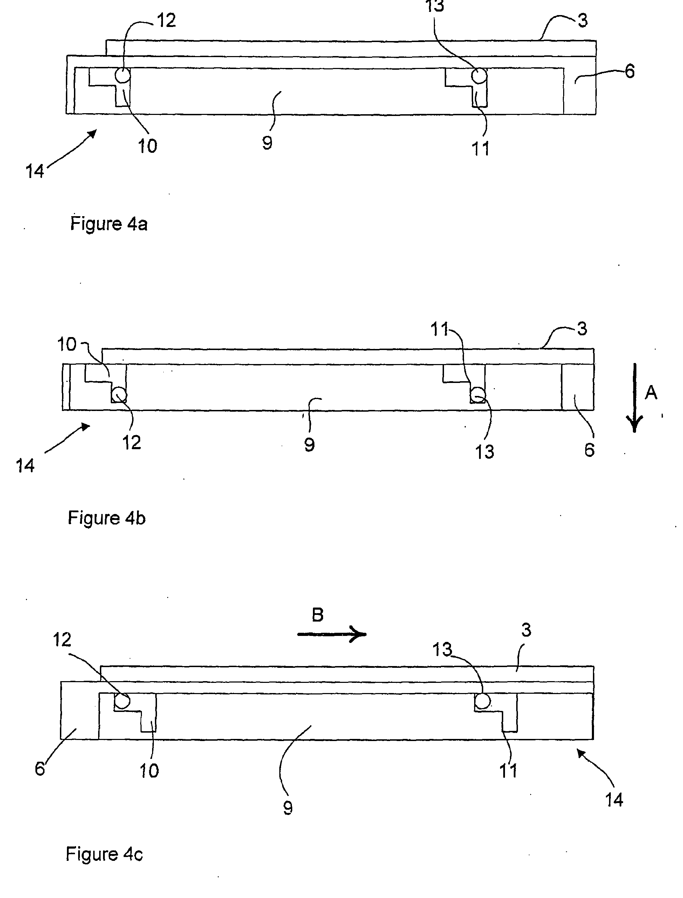

Figures 4a, 4b and 4c illustrate the operation of the locking mechanism in more detail. Figure 4a is a schematic plan view of the locking mechanism in accordance with the present invention in an unlocked position. In the unlocked position, the locking pins 12, 13 are located in the "L"-shaped cut-out portions at the right-angle between the upright and the foot of the "L". This enables the sliding glazed panel 3 to be articulated out of the plane of the fixed glazed panel 2 by use of the handle 8.

Figure 4b is a schematic plan view of the locking mechanism in accordance with the present invention in partway through the opening of the window. The arrow "A" indicates the inward direction of movement of the sliding glazed panel 3 when the handle 8 is rotated, pushing the locking pins 12, 13 into the foot end of the "L"-shaped cut-out portions as the sliding glazed panel 3 is moved out of the plane of the vehicle sliding window assembly 1 and the fixed glazed panel 2. Once in this position, the sliding glazed panel 3 can be slid along the length of the horizontal mounting rails 5, 6, to any desired position.

Figure 4c is a schematic plan view of the locking mechanism in accordance with the present invention, in a locked position. The arrow "B" indicates the direction of movement of the slideable cover 9 required to move the locking mechanism 14 into the locked position. By sliding the slideable cover 9 such that the upright of the "L"-shaped cut-out 10, 11 moves until the locking pin 12, 13 engages with the edge of the cut-out furthest away from the right-angle of the "L"-shape. This prevents articulated movement of the sliding glazed panel 3 out of the plane of the fixed glazed panel 2 when pushed from outside the vehicle in which the vehicle sliding window assembly 1 is fitted.

The locking mechanism 14 described in the above example comprises two "L"-shaped cut-outs 10, 11 and two locking pins 12, 13. However, depending on the design and/or size of the sliding glazed panel 3, it may be desirable to have one, two, three or more "L"-shaped cut-outs and corresponding locking pins, forming the locking mechanism. The locking pins 12, 13 may be mounted directly onto the sliding glazed panel 3, by means of mounting blocks bonded to the surface of the sliding glazed panel 3, for example, or may be mounted on a frame provided around the periphery of the sliding glazed panel 3 by mechanical or adhesive fixing. The locking pins 12, 13, may also perform a further function, for example, securing a closure or sliding mechanism to the sliding glazed panel 3. The locking pins 12, 13 may also be provided with a cap that prevents the locking pins 12, 13 from being pulled out of the "L"-shaped cut-outs by unexpected forces. The locking pins 12, 13 may be formed from a plastics material or a metal or metal alloy, such as aluminium, stainless steel or other metallic alloy.

The locking mechanism 14 may be used with windows where at least one of the sliding glazed panel and the fixed glazed panel is formed from single ply of toughened glass or from laminated glass (generally comprising two plies of annealed, semi-toughened or toughened float glass laminated together using a ply of an interlayer material such as poly vinyl butyral) or from a double-glazed unit, comprising two plies of glass spaced apart to form a cavity filled by a gas, such as air or argon. Although the locking mechanism is shown in use with a horizontally sliding flush window, it may be applied to a vertically sliding flush window, where the rails are mounted vertically for sliding movement of a sliding glazed panel in an up and down manner, rather than a side-to-side manner. Although the glazing described above is a so-called flush glazing, the glazing need not be flush with the vehicle body, nor need the sliding glazed panel and the fixed panel be flush when the sliding glazed panel is in the closed position.

## Claims

1. Vehicle sliding window assembly comprising a sliding glazed panel mounted flush with respect to a fixed glazed panel by means of at least one mounting rail, the sliding glazed panel being free to articulate out of the plane of the fixed glazed panel and to slide along at least part of the length of the mounting rail, wherein a slideable cover is provided in co-operation with the mounting rail, the slideable cover having at least one "L"-shaped cut-out portion for receiving a locking pin, and the sliding glazed panel is provided with at least one locking pin for engaging with the "L"-shaped cut-out portion to form a locking mechanism, such that the slideable cover is moveable between a first position, where the articulation of the sliding glazed panel out of the plane of the fixed glazed panel is prevented, and a second position, where the articulation of the sliding glazed panel out of the plane of the fixed glazed panel is enabled.

2. Vehicle sliding window assembly according to claim 1, wherein the locking mechanism comprises two "L"-shaped cut-outs, each receiving a single locking pin.

3. Vehicle sliding window assembly according to claim 1 or 2, wherein the sliding glazed panel is provided with a frame and the locking pins are mounted on the frame.

4. Vehicle sliding window assembly according to any of claims 1 to 3, wherein the slideable cover is formed from a lightweight material.

5. Vehicle sliding window assembly according to claim 4, wherein the slideable cover is formed from a thin, shaped metal sheet or a moulded plastics material.

6. Vehicle sliding window assembly according to any of claim 1 to 5, wherein the slideable cover is provided with grip enhancing means.

7. Vehicle sliding window assembly according to claim 6, wherein the grip enhancing means comprise ridges or contours.

8. Vehicle sliding window assembly according to any preceding claim, wherein at least one of the sliding glazed panel and the fixed glazed panel comprise one of:
a single ply of toughened glass; a laminated glazing comprising two plies of glass having an interlayer laminated therebetween; or a double-glazed unit, comprising two plies of glass spaced apart to form a cavity filled by a gas.
